# EUROPÄISCHE PATENTSCHRIFT

(11) **EP 1 520 127 B1**
(45) Veröffentlichungstag und Bekanntmachung des Hinweises auf die Patenterteilung: **16.11.2005**
(21) Anmeldenummer: 03740375.5
(22) Anmeldetag: 28.06.2003
(51) Int. Cl.: F16H 63/28, F16H 63/30

(54) **GETRIEBESCHALTUNG**
GEARSHIFT DEVICE
SYSTEME DE CHANGEMENT DE VITESSES

(30) Priorität: 05.07.2002 DE 10230184
(43) Veröffentlichungstag der Anmeldung: 06.04.2005
(73) Patentinhaber: ZF FRIEDRICHSHAFEN Aktiengesellschaft, 88038 Friedrichshafen (DE)
(72) Erfinder: FÜHRER, Gerhard, 88048 Friedrichshafen (DE)
(86) Internationale Anmeldenummer: PCT/EP2003/006882
(87) Internationale Veröffentlichungsnummer: WO 2004/005769

(56) Entgegenhaltungen:
- DE-A- 2 806 904
- US-A- 4 498 350

## Beschreibung

Die vorliegende Erfindung betrifft eine Getriebeschaltung für Losräder gemäß dem Oberbegriff des Patentanspruches 1.

Aus dem Stand der Technik sind Getriebeschaltungen bekannt, bei denen das Schalten durch axiales Verschieben von Schiebemuffen erfolgt. Dadurch kann die jeweilige Schiebemuffe ein zu schaltendes Losrad mit einer Hauptwelle formschlüssig verbinden. Das Verschieben der Schiebemuffe wird bei den bekannten Getriebeschaltungen durch Schaltelemente, wie z. B. Mitnehmer, Schaltschienen und Schaltgabeln realisiert. Um diese erforderlichen Bauteile in dem Getriebe unterzubringen, sind zusätzliche Bearbeitungen an dem Getriebegehäuse in nachteiliger Weise erforderlich.

Aus der Druckschrift US 4,498,350, die die Merkmale des Oberbegriffs des Anspruchs 1 zeigt, ist unter anderem ein Schaltmechanismus bekannt, bei dem eine Gewindespindel mit einem Elektromotor angetrieben wird. Auf der Gewindespindel ist ein axial bewegbares Element vorgesehen, welches über Federelemente mit einem Rahmen verbunden ist, der ebenfalls axial verschiebbar ist, indem die Gewindespindel gedreht wird. An dem Rahmen ist wiederum ein Betätigungselement vorgesehen, welches durch die axiale Verschiebung des Rahmens wahlweise ein erstes oder ein zweites Zahnrad mit dem Betätigungselement in Eingriff bringen kann.

Dieser bekannte Schaltmechanismus ist hinsichtlich seines konstruktiven Aufbaus sehr kompliziert ausgestaltet. Des weiteren ist eine große Anzahl von Elementen zum Betätigen des einen oder des anderen Zahnrades zwingend erforderlich.

Der vorliegenden Erfindung liegt die Aufgabe zugrunde, eine Getriebeschaltung gemäß der eingangs genannten Gattung vorzuschlagen, welche eine möglichst geringe Anzahl von Bauteilen aufweist und trotzdem eine einfache sowie sichere Betätigung der Getriebeschaltung ermöglicht.

Diese Aufgabe wird gemäß der Erfindung durch die Merkmale des Patentanspruches 1 gelöst. Weitere Varianten und Vorteile gehen aus den Unteransprüchen hervor.

Demnach wird eine erfindungsgemäße Getriebeschaltung vorgeschlagen, bei der die Schaltbetätigung bzw. die Verstellung der jeweiligen Schiebemuffe über zumindest eine Stelleinheit vorgesehen ist, welche ein Stellglied derart ansteuert, dass eine gewünschte Schaltstrategie durchgeführt wird. Eine Stelleinheit bzw. mehrere Stelleinheiten, welche einer Schiebemuffe zugeordnet sind, bilden ein sogenanntes Schaltpaket.

Auf diese Weise ermöglicht die erfindungsgemäße Getriebeschaltung eine Schaltbetätigung der jeweiligen Schaltmuffen, ohne die Einbindung von Schaltelementen, wie z. B. Mitnehmern, Schaltschienen und Schaltgabeln oder dergleichen. Dadurch wird der Aufwand an Bauteilen wesentlich verringert, da mit der erfindungsgemäßen Getriebeschaltung die Schaltunterstützung ohne zusätzliche Betätigungseinrichtungen erfolgen kann. Beispielsweise kann ein paralleles Schalten der Schiebemuffen, ein Gangblockieren, wodurch das gleichzeitige Einlegen zweier Gänge vermieden wird, und eine gewünschte Gangwahl sowie gewünschte Schaltstrategien mit geringstem Aufwand ermöglicht werden.

Im Rahmen der vorliegenden Erfindung ist vorgesehen, dass als Stelleinheit Elektromotoren oder dergleichen verwendet werden. Es ist auch möglich, dass auf andere Art und Weise angetriebene Stelleinheiten verwendet werden. Als Stellglieder werden. Zapfen verwendet, welche exzentrisch an der Welle der Stelleinheit vorgesehen sind. Auf diese Weise kann die Ganghaltefunktion aus der Kreisbewegung der Welle in den Totpunkten des Schaltweges erfolgen. Auch die Gangausschaltung kann mit der höchsten Übersetzung der Kreisbewegung aus den Totpunkten heraus erfolgen. Dadurch können höchstmögliche Ausschaltkräfte realisiert werden, welche ein wesentliches Kriterium zur Bewertung der Getriebeschaltung sind.

Vorzugsweise kann bei der Getriebeschaltung gemäß der Erfindung vorgesehen sein, dass mehrere Stelleinheiten für eine Schiebemuffe vorgesehen sind, welche bevorzugt um 180° um die Hauptwelle versetzt angeordnet sind. Es sind auch andere Anordnungen möglich. Beispielsweise können weitere Stelleinheiten verwendet werden, die dann z. B. gleichmäßig über den Umfang der Hauptwelle verteilt angeordnet sind.

Besonders vorteilhaft ist es, wenn die jeweilige Drehstellung der Stelleinheiten bzw. der Stellmotoren erfasst werden. Dadurch sind auch parallele Verstellungen der einzelnen Schiebemuffen möglich. Ferner kann auf diese Weise eine Gangerkennung und eine Gangabsicherung durchgeführt werden. Zur Erfassung der Drehstellungen der Wellen der einzelnen Stelleinheiten kann z. B. eine zentrale Erfassungseinrichtung oder auch mehrere jeweils in den einzelnen Stelleinheiten vorgesehene Erfassungseinrichtungen verwendet werden.

Gemäß einer vorteilhaften Weiterbildung kann beispielsweise eine zentrale Steuereinheit vorgesehen sein. Die zentrale Steuereinheit kann eine fahrzeugabgestimmte Schaltung bei der erfindungsgemäßen Getriebeschaltung realisieren. Vorzugsweise wird als zentrale Steuereinheit ein Computer, eine Rechnereinheit oder dergleichen verwendet. Es ist möglich, dass die zentrale Steuereinheit auch die Erfassungseinrichtung umfasst.

Die Erfindung wird im folgenden anhand der beigefügten Figuren näher erläutert.
Es zeigen:
- Fig. 1: eine geschnittene Ansicht einer erfindungsgemäßen Getriebeschaltung;
- Fig. 2: eine quergeschnittene Ansicht durch ein Schaltpaket entlang der Schnittlinie II-II gemäß Fig. 1 und
- Fig. 3: mehrere vergrößerte Prinzipdarstellungen auf ein jeweiliges Stellglied einer Stelleinheit bei eingelegtem zweiten Gang, in Neutralstellung und bei eingelegtem ersten Gang.

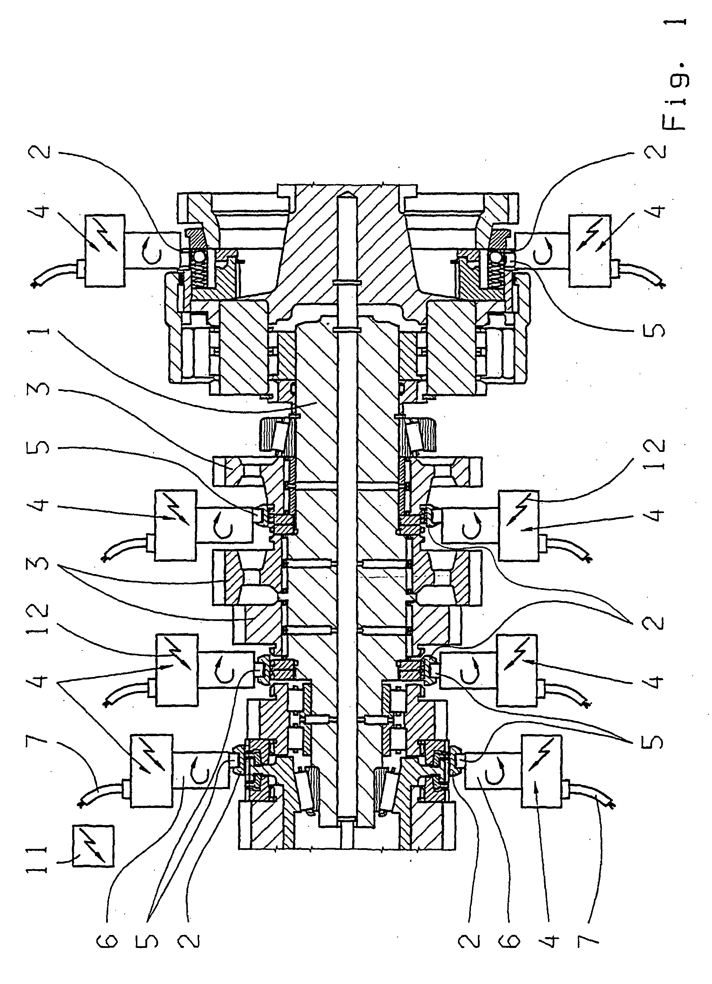

In Fig. 1 ist eine mögliche Ausgestaltung einer erfindungsgemäßen Getriebeschaltung dargestellt, wobei nur die für die Erfindung wesentlichen Bauteile beschrieben werden. Hinsichtlich der Bezugszeichen sind für mehrere identisch ausgestaltete Bauteile dasselbe Bezugszeichen verwendet worden.

Eine Hauptwelle 1 der Getriebeschaltung weist mehrere axial verschiebbare Schiebemuffen 2 auf, welche drehfest an der Hauptquelle 1 gelagert sind. Durch axiales Verschieben der jeweiligen Schiebemuffe 2 kann jeweils ein zu schaltendes Losrad 3 mit der Schiebemuffe 2 in Formschluss gebracht werden, wobei die Losräder 3 drehbar auf der Hauptwelle 1 gelagert sind und jeweils mit zumindest einem weiteren drehmomentübertragenden Element in Eingriff stehen.

Erfindungsgemäß ist vorgesehen, dass die jeweilige Schiebemuffe 2 durch zumindest eine Stelleinheit 4 betätigt wird. Jede Stelleinheit 4 steuert ein Stellglied derart an, dass eine Schaltbetätigung der jeweiligen Schiebemuffe 2 ermöglicht wird.

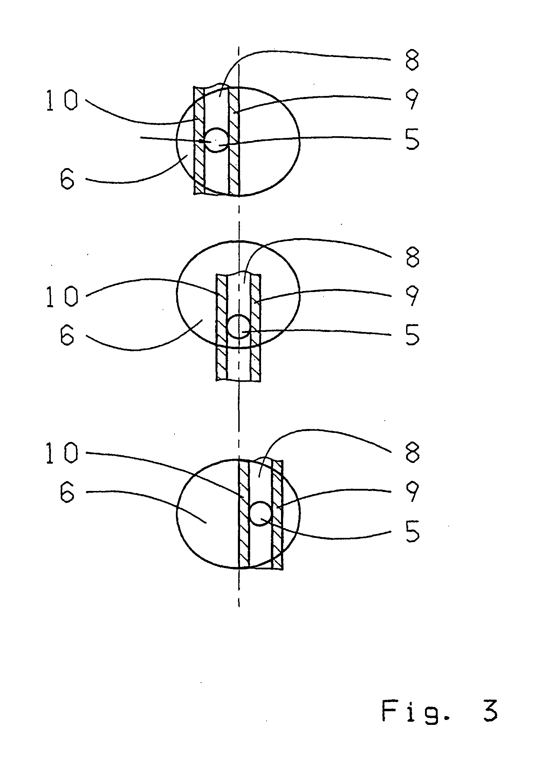

Bei der hier vorgeschlagenen Ausgestaltung der Getriebeschaltung sind als Stelleinheiten 4 elektrische Stellmotoren zur Verstellung der Schiebemuffen 2 vorgesehen, wobei zur Stromversorgung jeweils entsprechende Kabelanschlüsse 7 vorgesehen sind. An der Motorwelle 6 ist exzentrisch ein Zapfen 5 als Stellglied vorgesehen. Die Drehbewegung der Motorwelle 6 ist in Fig. 1 jeweils durch einen Pfeil angedeutet. Der Zapfen 5 ist in einer Ausnehmung 8 der jeweiligen Schiebemuffe 2 angeordnet, wobei die Ausnehmung 8 durch zwei Wangenseiten 9 und 10 begrenzt ist. Dies ist insbesondere in Fig. 3 zu erkennen. Der Zapfen 5 liegt an beiden Wangenseiten 9 und 10 an. Sobald die Motorwelle 6 mit dem exzentrischen Zapfen 5 gedreht wird, wird die zugeordnete Schiebemuffe 2 entsprechend axial auf der Hauptwelle 1 verschoben, sodass dann die Schiebemuffe 2 mit dem jeweiligen Losrad 3, welches geschaltet werden soll, in Formschluss gebracht wird.

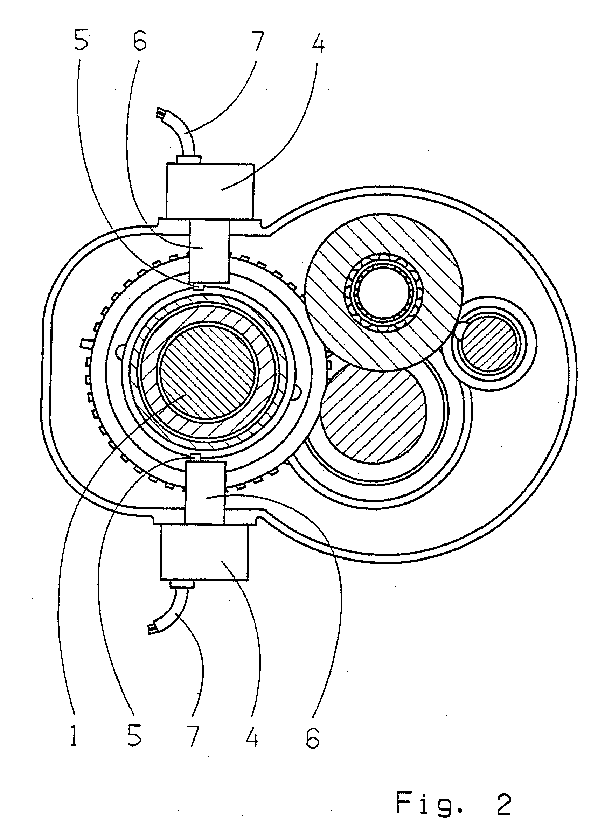

Die Stelleinheiten 4 sind jeweils bei einem Schaltpaket über den Umfang der Hauptwelle 1 vorzugsweise in einem Winkel von 180° versetzt angeordnet, welches insbesondere aus Fig. 2 ersichtlich ist.

Die einzelnen Stellmotoren eines Schaltpaketes sowie sämtliche Stellmotoren mehrerer Schaltpakete werden durch eine zentrale Steuereinheit 11 geeignet angesteuert. In diesem Ausführungsbeispiel sind vier Schaltpakte vorgesehen, wobei jedes Schaltpaket jeweils zwei Stelleinheiten 4 an einer Schiebemuffe 2 aufweist.

Die zentrale Steuereinheit 11 dient vorzugsweise zur fahrzeugabgestimmten Schaltung und ist mit den einzelnen Stelleinheiten 4 datentechnisch geeignet verbunden. Zur Erfassung der jeweiligen Drehstellungen der einzelnen Stellmotoren kann z. B. jede Stelleinheit 4 eine geeignete Erfassungseinrichtung 12 aufweisen, welche in Fig. 1 jeweils als gezackter Pfeil angedeutet ist. Dadurch kann eine parallele Verstellung der Schiebemuffen 2, eine Gangerkennung und auch eine Gangabsicherung ermöglicht werden.

In Fig. 2 ist eine Schnittdarstellung eines Schaltpaketes dargestellt. Aus dieser Figur ist wie bereits angedeutet ersichtlich, dass die Stelleinheiten 4 in einem Winkel von 180° versetzt an der Hauptwelle 4 angeordnet sind.

In Fig. 3 sind verschiedene Drehstellungen eines Stellmotors mit dem exzentrisch an der Motorwelle 6 angeordneten Zapfen 5 dargestellt. In der oberen Darstellung ist ein Gang, z. B. der zweite Gang, eingelegt, wobei in diesem Zustand die Schiebemuffe 2 den exzentrisch angeordneten Zapfen 5 nicht verstellen kann, weil der verstellhebelarm Null ist. Des weiteren ist in diesem Zustand die Gangausschaltkraft durch einen Pfeil angedeutet.

In der mittleren Darstellung von Fig. 3 ist eine Neutralstellung dargestellt, d. h., es ist in diesem Zustand kein Gang geschaltet. In der unteren Darstellung ist wieder ein geschalteter Zustand angedeutet, wobei z. B. der erste Gang eingelegt ist.

### Bezugszeichen

- 1: Hauptwelle
- 2: Schiebemuffen
- 3: Losrad
- 4: Stelleinheit
- 5: Zapfen
- 6: Motorwelle
- 7: Kabelanschluss
- 8: Ausnehmung
- 9, 10: Wangenseiten
- 11: zentrale Einheit
- 12: Erfassungseinrichtung

## Patentansprüche

1. Getriebeschaltung für Losräder (3) mit Schiebemuffen (2), welche drehfest mit einer Hauptwelle (1) verbunden und durch axiales Verschieben mit einem zu schaltenden Losrad (3) in Formschluss bringbar sind, wobei die Betätigung der jeweiligen Schiebemuffe (2) über zumindest eine Stelleinheit (4) vorgesehen ist, welche ein Stellglied derart ansteuert, dass eine Schaltbetätigung der jeweiligen Schiebemuffe (2) möglich ist und die Stelleinheit (4) einen elektrischen Stellmotor aufweist, **dadurch gekennzeichnet, dass** an einer Motorwelle (6) des Stellmotors ein Zapfen (5) als Stellglied exzentrisch vorgesehen ist, der die Schiebemuffe (2) betätigt.

2. Getriebeschaltung nach Anspruch 1, **dadurch gekennzeichnet, dass** der Zapfen (5) bei einer Kreisbewegung der Motorwelle (6) Totpunkte des Schaltweges der Schiebemuffe (2) erreicht und in diesen Totpunkten die Schiebemuffe (2) den Formschluss des zu schaltenden Losrades (3) hält.

3. Getriebeschaltung nach einem der Ansprüche 1 oder 2, **dadurch gekennzeichnet, dass** zur Erfassung der Drehstellung der Motorwelle (6) zumindest eine Erfassungseinrichtung (12) vorgesehen ist.

4. Getriebeschaltung nach Anspruch 3, **dadurch gekennzeichnet, dass** die Erfassungseinrichtung (12) in die Stelleinheit (4) integriert ist.

5. Getriebeschaltung nach einem der vorangehenden Ansprüche, **dadurch gekennzeichnet, dass** zwei Stelleinheiten (4) an jeder Schiebemuffe (2) vorgesehen sind, wobei die Stelleinheiten (4) in einem Winkel von etwa 180° um die Hauptwelle (1) versetzt angeordnet sind.

6. Getriebeschaltung nach einem der vorangehenden Ansprüche, **dadurch gekennzeichnet, dass** zur fahrzeugabgestimmten Schaltung eine zentrale Steuereinheit (11) vorgesehen ist.

## Claims

1. The invention relates to a gearshift mechanism for idler gears (3) and features sliding sleeves (2) which are nonrotationally connected to a main shaft (1) and through axial displacement can be positively engaged with an idler gear (3) which is to be shifted, with actuation of the respective sliding sleeve (2) being performed via at least one actuator (4), which controls an actuator in such a way that shifting operation of the respective sliding sleeve (2) is possible, and with the actuator (4) featuring an electric servomotor, **characterized in that** on a motor shaft (6) of the servomotor there is a stud (5) as eccentric actuator which actuates the sliding sleeve (2).

2. A gearshift mechanism according to claim 1, **characterized in that** during circular motion of the motor shaft (6), the stud (5) passes dead centers of the shift travel of the sliding sleeve (2) and that in these dead centers the sliding sleeve (2) maintains the positive engagement of the idler gear (3) to be shifted.

3. A gearshift mechanism according to one of the claims 1 or 2, **characterized in that** at least one sensing system (12) is provided to register the rotational position of the motor shaft (6).

4. A gearshift mechanism according to claim 3, **characterized in that** the sensing system (12) is integrated into the actuator (4).

5. A gearshift mechanism according to one of the preceding claims, **characterized in that** two actuators (4) are provided on each sliding sleeve (2), with the actuators (4) being staggered around the main shaft (1) at an angle of about 180°.

6. A gearshift mechanism according to one of the preceding claims, **characterized in that** a central control unit (11) is provided for vehicle-tuned shifting.

## Revendications

1. Dispositif de commande de boîte de vitesses pour des pignons fous (3) pourvus de baladeurs (2) qui sont liés solidairement en rotation à un arbre primaire (1) et qui peuvent être mis par translation axiale en liaison par sûreté de forme avec un pignon fou (3) à commander, l'actionnement du baladeur (2) considéré étant réalisé au moyen d'au moins une unité de manoeuvre (4) qui active un élément de manoeuvre, de sorte qu'un actionnement de commande du baladeur (2) considéré est possible, et l'unité de manoeuvre (4) comprenant un servomoteur électrique, **caractérisé en ce que**, sur un arbre moteur (6) du servomoteur, est prévu en position excentrique un tourillon (5) constituant un élément de manoeuvre qui actionne le baladeur (2).

2. Dispositif de commande de boîte de vitesses selon la revendication 1, **caractérisé en ce que**, dans un mouvement circulaire de l'arbre moteur (6), le tourillon (5) atteint des points morts du trajet de commande du baladeur (2) et, à ces points morts, le baladeur (2) maintient la liaison par sûreté de forme du pignon fou (3) à commander.

3. Dispositif de commande de boîte de vitesses selon l'une des revendications 1 ou 2, **caractérisé en ce que**, pour détecter la position de rotation de l'arbre moteur (6), il est prévu au moins un dispositif de détection (12).

4. Dispositif de commande de boîte de vitesses selon la revendication 3, **caractérisé en ce que** le dispositif de détection (12) est intégré dans l'unité de manoeuvre (4).

5. Dispositif de commande de changement de boîte de vitesses selon l'une des revendications précédentes, **caractérisé en ce que** deux unités de manoeuvre (4) sont prévues sur chaque baladeur (2), les unités de manoeuvre (4) étant décalées d'un angle d'environ 180° autour de l'arbre primaire (1).

6. Dispositif de commande de changement de boîte de vitesses selon l'une des revendications précédentes, **caractérisé en ce qu'**une unité de commande centrale (11) est prévue pour réaliser une commande accordée au véhicule.
